# EUROPÄISCHE PATENTSCHRIFT

(11) **EP 2 605 881 B1**
(45) Veröffentlichungstag und Bekanntmachung des Hinweises auf die Patenterteilung: **06.01.2016**
(21) Anmeldenummer: 11748348.7
(22) Anmeldetag: 17.08.2011
(51) Int. Cl.: B23K 20/26, H01R 43/02, B23K 20/10

(54) **VERFAHREN UND ANORDNUNG ZUM VERSCHWEIßEN VON ELEKTRISCHEN LEITERN**
METHOD AND ARRANGEMENT FOR WELDING ELECTRICAL CONDUCTORS
PROCÉDÉ ET SYSTÈME DE SOUDAGE DE CONDUCTEURS ÉLECTRIQUES

(30) Priorität: 24.11.2010 DE 102010060767; 18.08.2010 DE 102010037031
(43) Veröffentlichungstag der Anmeldung: 26.06.2013
(73) Patentinhaber: Schunk Sonosystems GmbH, 35435 Wettenberg (DE)
(72) Erfinder: RÜHL, Sebastian, 35083 Wetter (DE); STROBEL, Heiko, 35516 Münzenberg (DE); KOC, Sinan, 35325 Mücke (DE); WAGNER, Peter, 35435 Wettenberg (DE); STROH, Dieter, 35435 Wettenberg (DE)
(74) Vertreter: Stoffregen, Hans-Herbert
(86) Internationale Anmeldenummer: PCT/EP2011/064142
(87) Internationale Veröffentlichungsnummer: WO 2012/022763

(56) Entgegenhaltungen:
- EP-A1- 1 236 563
- WO-A1-2009/101844
- WO-A2-2008/148813
- CH-A- 378 203
- DE-A1- 1 499 005
- JP-A- 2007 294 154
- JP-A- 2010 073 475
- US-A- 4 010 915

## Beschreibung

Die Erfindung bezieht sich auf ein Verfahren zum Verschweißen von aus metallischen Litzen oder Adern bestehenden Leitungen zu einem End- oder Durchgangsknoten durch Einbringen von jeweils einem ersten Abschnitt jeder Leitung in einen Verdichtungsraum einer Ultraschallschweißvorrichtung, in dem die ersten Abschnitte entlang einer Geraden verlaufen, wobei zumindest eine Leitung im Abstand zu dem zu schweißenden End- oder Durchgangsknoten ein Bauelement wie Kontaktelement aufweist und zumindest die das Bauelement aufweisende Leitung zwischen dem Verdichtungsraum und dem Bauelement in einem zweiten Abschnitt durch mittels einer Umlenkeinrichtung erzwungene Verlaufsänderung der Leitung gedämpft wird.

Die Erfindung bezieht sich auch auf eine Anordnung zum Ultraschallverschweißen von aus metallischen Litzen oder Adern bestehenden Leitungen, umfassend einen jeweils einen ersten Abschnitt einer jeden Leitung aufnehmenden Verdichtungsraum, entlang dessen Längsachse die ersten Abschnitte ausrichtbar sind, sowie eine zumindest eine der Leitungen, vorzugsweise sämtliche Leitungen aufnehmende Umlenkeinrichtung, die im Abstand zu dem Verdichtungsraum in Verlängerung der Längsachse angeordnet ist.

Werden elektrische Leitungen, von denen zumindest eine, häufig mehrere endseitig vor dem Verschweißen zu einem End- oder Durchgangsknoten mit Bauelementen wie Kontaktteilen, die sehr filigran ausgebildet sein können, versehen sind, so werden beim Verschweißen mittels Ultraschall die auftretenden Schwingungen über die Leitungen auf die Kontaktteile übertragen, wodurch die Gefahr von Beschädigungen bzw. Zerstörungen besteht. Bei den Kontaktteilen kann es sich z. B. um Steckkontakte, Steckverbinder, Stecker oder Buchsenteile handeln.

Um die Schwingung zu dämpfen, um also die Kontaktteile zu schützen, ist es bekannt, dass auf die Leitungen ein Dämpfungselement gedrückt wird. Dies kann in Form von zueinander zu verstellenden Dämpfungsbacken erfolgen. Allerdings hat sich herausgestellt, dass die Wirkung der Dämpfung nicht sehr effektiv ist.

Eine effektivere Schwingungsdämpfung wird dann erreicht, wenn die Leitungen nach dem Verdichtungsraum um 90° abgewinkelt werden. Allerdings ist eine diesbezügliche Maßnahme vom Handling her ungünstig, da häufig sehr lange Leitungen verschweißt werden, so dass von der Größe des Arbeitsplatzes her nicht immer die Möglichkeit besteht, die Leitungen um 90° abzuwinkeln. Dabei ist auch zu berücksichtigen, dass sich die Leiter beim Schweißen eines Durchgangsknotens zu beiden Seiten des Verdichtungsraums erstrecken können.

Aus der JP 2007 294 154 ist eine Anordnung zum Ultraschallschweissen nach dem Oberbegriff des Anspruchs 8 bekannt.

Aus der JP 2010 73475 ist eine Anordnung zum Ultraschallschweissen bekannt.

Aus der WO1997/004941 A1 ist eine Anordnung zur Fixierung der Position von abisolierten Leiterenden elektrischer Leiter bekannt, wobei die Leiterenden zur Herstellung einer elektrischen Verbindung mittels Ultraschall verschweißt werden und zu einer Lagefixierung der Leiter zueinander ein Halterahmen vorgesehen ist, der mit die die Leiterenden aufweisenden Endbereiche der elektrischen Leiter an einem ersten Teilbereich ihrer Umfangsseiten festlegenden Halteelementen versehen ist und mit einem die Leiter an einem zweiten Teilbereich ihrer Umfangsseiten festlegenden Halteteil verrastbar ist, wobei der Halterahmen und das Halteteil zu einer endgültigen gesicherten Lagefixierung der Leiterenden mit einer Umspritzung aus Kunststoff, die die Leiterenden selbst ausspart, versehen ist.

Aus der EP-A-1 236 563 ist ein Verfahren zum Löten von Leitern zu entnehmen, wobei Lotmaterial mittels Ultraschall erweicht wird. Zu verschweißende Leiter werden von einem Kunststoffgehäuse aufgenommen, das von zumindest einem der Leiter durchsetzt wird.

Um den Schlupf zum Fördern eines elektrischen Leiters zu vermeiden, sieht die WO-A-2009/101844 vor, dass der Leiter um Rollen geführt wird. Eine der Rollen ist dabei verstellbar zu anderen Rollen angeordnet.

Der vorliegenden Erfindung liegt die Aufgabe zu Grunde, ein Verfahren und eine Anordnung der eingangs genannten Art so weiterzubilden, dass ein effektives Dämpfen der Leitungen erfolgt, so dass Beschädigungen von von den Leitungen ausgehenden Bauelementen wie Kontaktteilen ausgeschlossen werden, ohne dass es eines zusätzlichen Platzes bedarf bzw. eines das Handling erschwerenden Platzbedarfs benötigt. Es sollen die Leitungen in gewohnter Weise und unter Nutzung grundsätzlich üblicher Arbeitsplätze zu End- oder Durchgangsknoten verschweißt werden, ohne dass ein aufwändiges Handling erforderlich ist.

Um die Schwingung zu dämpfen, um also die Kontaktteile zu schützen, ist es bekannt, dass auf die Leitungen ein Dämpfungselement gedrückt wird. Dies kann in Form von zueinander zu verstellenden Dämpfungsbacken erfolgen. Allerdings hat sich herausgestellt, dass die Wirkung der Dämpfung nicht sehr effektiv ist.

Eine effektivere Schwingungsdämpfung wird dann erreicht, wenn die Leitungen nach dem Verdichtungsraum um 90° abgewinkelt werden. Allerdings ist eine diesbezügliche Maßnahme vom Handling her ungünstig, da häufig sehr lange Leitungen verschweißt werden, so dass von der Größe des Arbeitsplatzes her nicht immer die Möglichkeit besteht, die Leitungen um 90° abzuwinkeln. Dabei ist auch zu berücksichtigen, dass sich die Leiter beim Schweißen eines Durchgangsknotens zu beiden Seiten des Verdichtungsraums erstrecken können.

Aus der WO1997/004941 A1 ist eine Anordnung zur Fixierung der Position von abisolierten Leiterenden elektrischer Leiter bekannt, wobei die Leiterenden zur Herstellung einer elektrischen Verbindung mittels Ultraschall verschweißt werden und zu einer Lagefixierung der Leiter zueinander ein Halterahmen vorgesehen ist, der mit die die Leiterenden aufweisenden Endbereiche der elektrischen Leiter an einem ersten Teilbereich ihrer Umfangsseiten festlegenden Halteelementen versehen ist und mit einem die Leiter an einem zweiten Teilbereich ihrer Umfangsseiten festlegenden Halteteil verrastbar ist, wobei der Halterahmen und das Halteteil zu einer endgültigen gesicherten Lagefixierung der Leiterenden mit einer Umspritzung aus Kunststoff, die die Leiterenden selbst ausspart, versehen ist.

Der vorliegenden Erfindung liegt die Aufgabe zu Grunde, ein Verfahren und eine Anordnung der eingangs genannten Art so weiterzubilden, dass ein effektives Dämpfen der Leitungen erfolgt, so dass Beschädigungen von von den Leitungen ausgehenden Bauelementen wie Kontaktteilen ausgeschlossen werden, ohne dass es eines zusätzlichen Platzes bedarf bzw. eines das Handling erschwerenden Platzbedarfs benötigt. Es sollen die Leitungen in gewohnter Weise und unter Nutzung grundsätzlich üblicher Arbeitsplätze zu End- oder Durchgangsknoten verschweißt werden, ohne dass ein aufwändiges Handling erforderlich ist.

Zur Lösung der Aufgabe wird verfahrensmäßig im Wesentlichen vorgeschlagen, dass zumindest die das Bauelement aufweisende Leitung in Verlängerung der Geraden ausgerichtet wird und auf den zweiten Abschnitt auf gegenüberliegende Seiten von diesem die Umlenkeinrichtung einwirkt, wobei durch Verstellen der Umlenkeinrichtung zu dem zweiten Abschnitt dieser abschnittsweise eine Verlaufsänderung erfährt. Vorzugsweise wird dem zweiten Abschnitt eine bogen- oder S- oder Z- oder mäanderförmige Verlaufsänderung aufgeprägt. Die Auslenkung der Leitungen sollte zwischen 3 mm und 20 mm betragen.

Hierzu ist insbesondere vorgesehen, dass der zweite Abschnitt zwischen mehreren Umlenkelementen wie zylinder- oder kegelförmigen Elementen oder Formstücken geführt wird, die zur Erzeugung der Verlaufsänderung quer zur Längsrichtung der Leitung bzw. Leitungen, insbesondere senkrecht zu der Geraden relativ zueinander verstellt werden.

Bevorzugterweise werden sämtliche entlang der das Bauelement aufweisenden Leitung verlaufenden weiteren Leitungen zwischen den eine Führung bildenden Umlenkelementen hindurchgeführt und erfahren eine vorzugsweise bogenförmige Verlaufsänderung. Von einer Bogenform abweichende Verlaufsänderungen werden gleichfalls von dem Begriff "bogenförmig" erfasst, sofern hierdurch die Leitung derart durch die Umlenkeinrichtung in seinem Verlauf von der Geraden abgelenkt wird, dass die gewünschte Dämpfung erzielbar ist.

Dabei ist die Verlaufsänderung grundsätzlich nur in dem zweiten Abschnitt vorgesehen, so dass die Leitungen, von denen zumindest eine das Bauelement aufweist, sich erneut entlang der Geraden oder im Wesentlichen entlang der Geraden vor und hinter der Umlenkeinrichtung erstrecken. Um dies sicherzustellen, ist insbesondere vorgesehen, dass auf der in Bezug auf den Verdichtungsraum gegenüberliegenden Seite der Umlenkeinrichtung, also auf verdichtungsraumabgewandter Seite der Umlenkeinrichtung, ein weiteres Führungselement verläuft, gegen das sich die Leitungen anlegen, so dass bei der durch das relative Verstellen der Druckelemente zueinander erfolgenden Verlaufsänderung ein Auslenken der freien Enden der Leitungen nicht derart erfolgen kann, dass diese merklich in ihrem Verlauf von dem der Geraden abweichen.

Um zumindest ein Umlenkelement zu einem anderen Umlenkelement bzw. zwei Umlenkelementen, von denen jeweils ein Umlenkelement in Verlaufsrichtung der Leitung vor und hinter dem verstellbaren Umlenkelement verläuft, zu verstellen, erfolgt eine Bewegung in einer horizontal oder vertikal verlaufenden Ebene. Vertikal verlaufende Ebene bedeutet dabei, dass das Umlenkelement sowohl senkrecht zur Verlängerung der Längsachse des Verdichtungsraums als auch vertikal hierzu verstellt wird - bei horizontal verlaufender Längsachse. Hierdurch ergibt sich eine überaus kompakte Baueinheit.

Um das Einlegen der Leitungen in den Verdichtungsraum bei vertikal verstellbarem Umlenkelement zu erleichtern, wird das verstellbare Umlenkelement, das in Bezug auf die Leitungen über diesen bzw. oberhalb von diesen verläuft, zunächst aus dem Einführbereich der Leitungen entfernt, um sodann nach Einlegen der Leitungen in den Verdichtungsraum horizontal verstellt zu werden, um also oberhalb der Leitungen positioniert zu werden. Sodann wird das Umlenkelement abgesenkt, um zumindest während des Schweißens der Leitungen diesen eine Verlaufsänderung derart aufzuzwingen, dass die Leitungen die gewünschte Dämpfung erfahren. Ein erstes Gegenumlenkelement verläuft zwischen dem Verdichtungsraum und dem vertikal verstellbaren Umlenkelement, und zwar in Bezug auf das verstellbare Umlenkelement auf der gegenüberliegenden Seite der Leitungen. Das Gegenumlenkelement kann dabei auch ein Abschnitt des Bereichs der Ultraschallschweißvorrichtung sein, der die Sonotrode bzw. den Amboss aufnimmt, je nachdem, welches Werkzeug in dem entsprechenden Bereich vorhanden ist. Auf der verdichtungsraumabgewandeten Seite ist ein zweites Gegenumlenkelement angeordnet, und zwar in Bezug auf die Leitungen auf der gleichen Seite wie das erste Gegenumlenkelement.

Des Weiteren sollte auf der verdichtungsraumabgewandeten Seite des verstellbaren Umlenkelements, und zwar in Bezug auf die Leitungen auf der gleichen Seite wie diese, ein weiteres ein Widerlager bildendes Umlenkelement vorgesehen sein, um beim Einwirken des verstellbaren Umlenkelements auf die Leitungen diese derart auszurichten, dass ein Verlauf in etwa in Verlängerung der Längsachse des Verdichtungsraums ermöglicht wird. Das Widerlager sollte zum verstellbaren Umlenkelement einen größeren Abstand als das zweite Gegenumlenkelement aufweisen.

Das horizontale und vertikale Verstellen des verstellbaren Umlenkelements kann auch gleichzeitig erfolgen, d. h. beim Absenken fährt das Umlenkelement gleichzeitig nach vorne über die Leitungen und beim Abheben wird das Umlenkelement gleichzeitig aus dem Bereich der Leitungen zurückgezogen.

Nach durchgeführtem Schweißvorgang und Zurückfahren des verstellbaren Umlenkelements kann auf die durch das Druckelement verformten Leitungen ein Druckelement einwirken, das entlang einer Ebene verstellbar ist, die der vertikalen Verstellebene des Druckelements entspricht. Dabei wirkt das Druckelement auf die Leitung von der Seite her, die dem verstellbaren Druckelement gegenüberliegt.

Des Weiteren ist vorgesehen, dass eine Überwachung der auch als Dämpfungseinrichtung zu bezeichnenden Umlenkeinrichtung mittels einer Sensorik wie Weg- oder Kraftmesseinrichtung oder Lichtschranke erfolgt, um die ermittelten Werte einer übergeordneten Steuerung zuzuführen, so dass infolgedessen die Dämpfungseinrichtung überwach- und dokumentierbar ist.

Aufgrund der erfindungsgemäßen Lehre wird die Schwingungsamplitude der Leitung bzw. Leitungen im Bereich des Bauelements im Vergleich zur Amplitude der Sonotrode um zumindest 50 %, vorzugsweise bis 95 %, insbesondere zwischen 70 % und 95 % gedämpft.

Eine Anordnung zum Ultraschallschweißen von elektrischen Leitern zu einem End- oder Durchgangsknoten der eingangs genannten Art zeichnet sich im Wesentlichen dadurch aus,
dass die Umlenkeinrichtung zumindest zwei relativ zueinander verstellbare Umlenkelemente aufweist, die im Bereich der Verlängerung der Längsachse des Verdichtungsraums eine Führung für die zumindest eine Leitung bilden, durch die der Leitung im Bereich der Führung eine Verlaufsänderung aufzwingbar ist.

Dabei ist nach einer Ausführungsform vorgesehen, dass zumindest ein Umlenkelement, vorzugsweise jedes Umlenkelement, eine zylinder- oder kegelförmige Geometrie aufweisen kann. Ferner kann zumindest ein Umlenkelement an seiner Oberseite profiliert und ggfs. auch drehbar gelagert sein, um ein sicheres Erfassen und Umlenken der Leitung zu ermöglichen, ohne dass diese ggfs. gestreckt wird. Eine entsprechende Ausbildung kann auch für mehrere oder sämtliche Umlenkelemente zur Anwendung kommen.

Insbesondere dann, wenn die Druckelemente eine Kegelform-Geometrie aufweisen, sollten deren Spitzen in Richtung der Fläche des Arbeitsplatzes zeigen, entlang der die Leitungen geführt werden. Dies ist von Vorteil, da Leitungen unterschiedlicher Querschnitte miteinander verschweißt werden können, wobei üblicherweise zunächst Leitungen mit dem größten Querschnitt auf der Bodenfläche des Verdichtungsraums angeordnet werden. Somit wird ein Stapeln erleichtert.

Bei den entsprechenden Ausbildungen gehen die Umlenkelemente von einer horizontal oder im Wesentlichen horizontal verlaufenden Arbeitsebene aus, entlang der die Leitungen verlaufen. Somit erfolgt ein relatives Verstellen der Druckelemente zueinander in der Arbeitsebene, also im Wesentlichen horizontal.

Alternativ und zur Erzielung einer kompakten Bauweise besteht die Möglichkeit, dass das zumindest eine verstellbare Druckelement sowohl senkrecht zu den Leitungen als auch vertikal verstellt wird. Wird als Antrieb z. B. ein Pneumatikzylinder verwendet, so wird der mit dem Druckelement verbundene Kolben vertikal verstellt. Für die Umlenkeinrichtung bedarf es daher nur wenig Platz, da der Zylinder an den Kopf, also an die Frontseite der Ultraschallschweißvorrichtung angebaut werden kann.

Um das Einlegen der Leitungen im Verdichtungsraum durch das verstellbare und oberhalb der Leitungen verlaufende Druckelement nicht zu behindern, kann dieses zum Einlegen aus dem Einlegeweg der Leitungen zurückgefahren werden. Dabei kann ein Mechanismus zur Anwendung gelangen, wie dieser auch bei einer Ultraschallschweißvorrichtung in Bezug auf deren Ambosse mit Träger und senkrecht zu diesen verstellbaren Querhaupt bekannt ist.

Es besteht auch die Möglichkeit, dass Druckstücke als Umlenkelemente verwendet werden, die leitungsseitig derart profiliert sind, dass beim Zusammenfahren der Druckstücke die zwischen diesen befindliche Leitung die gewünschte Verlaufsänderung erfährt. Dabei ist insbesondere vorgesehen, dass ein Druckstück stationär angeordnet ist, also quasi ein Gegenlager zu dem verstellbaren Druckstück bildet. Die Geometrien der leitungsseitig verlaufenden Oberflächen sind dabei komplementär zueinander ausgebildet.

Des Weiteren kann ein Druckelement als Balgzylinder ausgebildet sein, der zu einem Gegenlager verstellbar ist, dessen leitungsseitige Oberfläche die zu erzielende Verlaufsänderung der Leitung bzw. Leitungen sicherstellt.

Es besteht auch die Möglichkeit, dass die verwendeten Druckformstücke ein- oder mehrteilig ausgebildet sind.

Ferner können die Druckformstücke leitungsseitig elastisch ausgebildet sein.

Es ist auch nicht zwingend erforderlich, dass dem verstellbaren Druckformstück ein Gegenlager in Form eines Druckformstücks zugeordnet ist. Stifte oder Rollen können gleichfalls derart einem Druckformstück zugeordnet werden, dass die Verlaufsänderung gewährleistet ist.

Können die auf einer Seite der Führung angeordneten Druckelemente, die gegenüberliegend zu dem verstellbaren Druckelement verlaufen, stationär angeordnet sein, so besteht auch die Möglichkeit eines Verstellens bzw. Verfahrens, um die Leitungen problemlos in die Führung einzubringen.

Bei der Verwendung von zylinderförmigen Druckelementen, also quasi Stiften, können diese des Weiteren zur Vertikalen kippbar angeordnet sein, um das Einlegen der Leitungen zu erleichtern.

Bei stift- bzw. zylinder- bzw. kegelförmig ausgebildeten Druckelementen sollte eine Anordnung derart erfolgen, dass zumindest zwei Druckelemente auf einer Seite der Führung und zwischen diesen auf der gegenüberliegenden Seite der Führung zumindest ein Druckelement verlaufen.

Es besteht aber auch die Möglichkeit, dass das verstellbare Druckelement gabelförmig ausgebildet ist und zwei quer zu den einzulegenden Leitungen verlaufende stiftförmige Elemente aufweist, in die die Leitung bzw. Leitungen eingelegt wird bzw. werden, so dass durch Verstellen zu den weiteren vor und hinter dem gabelförmig verstellbaren Druckelement angeordneten Druckelementen diese als Gegenlager wirken, wenn das gabelförmige Druckelement in Richtung einer gedachten Geraden verstellt wird, die die weiteren Druckelemente verbindet. Die gabelförmige Ausbildung bietet den Vorteil, dass beim Zurückfahren des entsprechenden Druckelements die Leitungen zurückgebogen werden, damit diese über ihre gesamte Länge weiterhin entlang der Geraden verlaufen.

Da erwähntermaßen bei der Herstellung von Durchgangsknoten zu beiden Seiten des Verdichtungsraums Leitungen Bauelemente aufweisen können, können entsprechende Umlenkeinrichtungen vor und hinter dem Verdichtungsraum vorgesehen sein.

Um während der erzwungenen Verlaufsänderung ein Auslenken der Leitungen in ihren freien Endabschnitten zu verhindern, ist bevorzugterweise ergänzend ein Führungselement auf der verdichtungsraumfernliegenden Seite der Umlenkeinrichtung angeordnet, und zwar auf der Seite in Bezug auf die Verlängerung der Längsachse des Verdichtungsraums, auf der sich das verstellbare Umlenkelement befindet.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:
- Fig. 1: eine Prinzipdarstellung einer Ultraschallschweißvorrichtung nach dem Stand der Technik,
- Fig. 2.: die Ultraschallschweißvorrichtung gemäß Fig. 1 mit einer Dämpfungseinrichtung nach dem Stand der Technik,
- Fig. 3: eine Prinzipdarstellung einer Anordnung mit einer ersten Ausführungsform einer erfindungsgemäßen Dämpfungseinrichtung,
- Fig. 4: die Anordnung gemäß Fig. 3 in Seitenansicht,
- Fig. 5: eine Anordnung mit einer zweiten Ausführungsform einer erfindungsgemäßen Dämpfungseinrichtung,
- Fig. 6: eine Anordnung einer dritten Ausführungsform einer erfindungsgemäßen Dämpfungseinrichtung beim Einlegen von Leitungen,
- Fig. 7: die Anordnung gemäß Fig. 6 mit auf die Leitungen einwirkendem verstellbaren Druckelement und
- Fig. 8: die Anordnung gemäß Fig. 6 und 7 nach erfolgtem Schweißen der Leitungen und Zurückbiegen dieser.

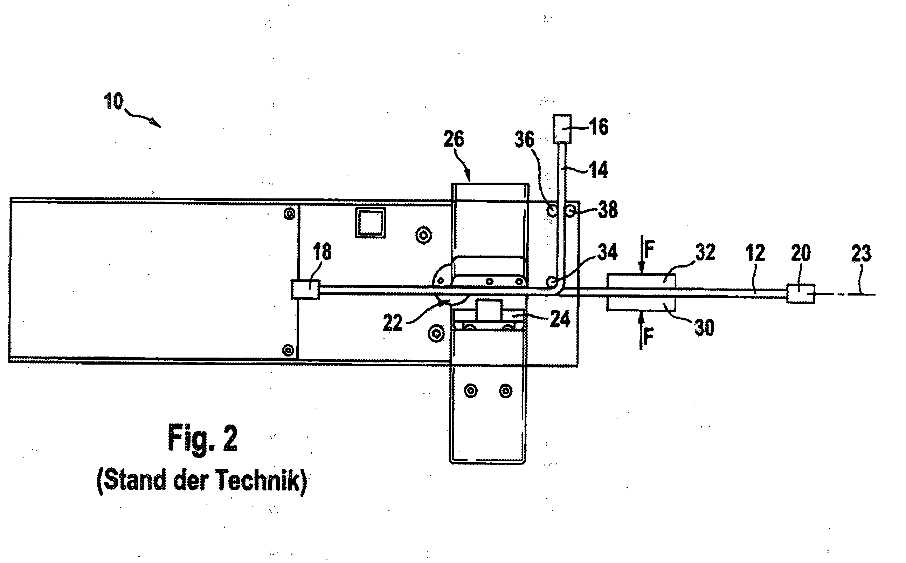

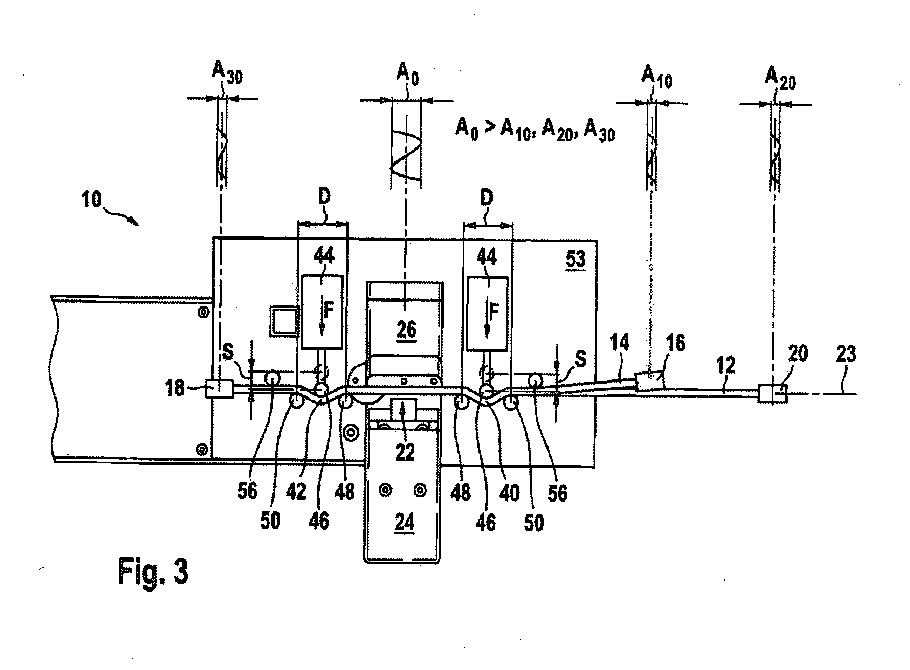

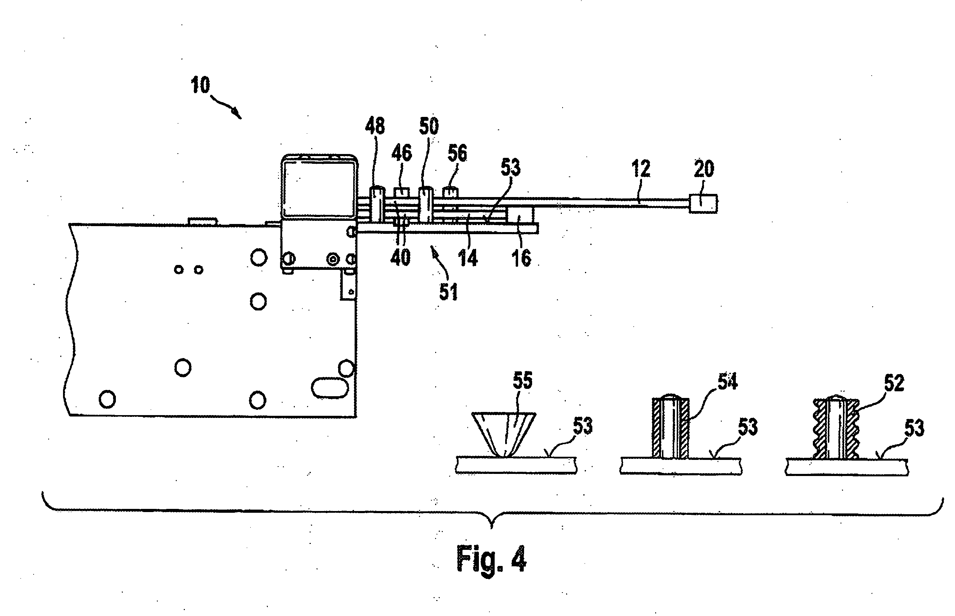

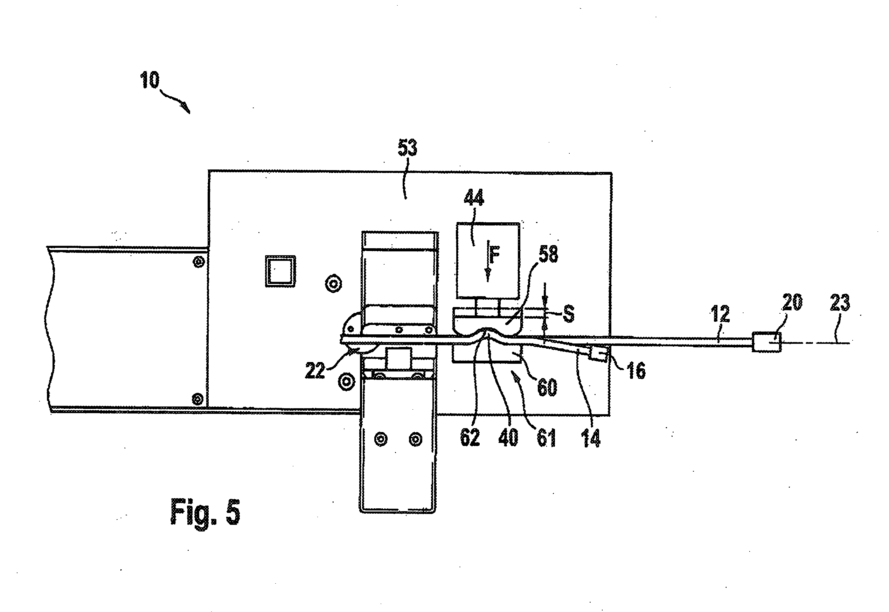

In den Figuren, in denen grundsätzlich gleiche Elemente mit gleichen Bezugszeichen versehen werden, ist eine Ultraschallschweißvorrichtung 10 dargestellt, mit der elektrische Leitungen 12, 14 zu einem Durchgangsknoten (Fig. 3, 4) oder einem Endknoten (Fig. 5 - 8) verschweißt werden. Bei den Leitungen 12, 14 handelt es sich um solche, die aus einer Vielzahl von Litzen oder feinen Adern bestehen, die außerhalb des herzustellenden Knotens eine Isolierung aufweisen. Entsprechende Leitungen werden z. B. in der Automobilindustrie für ein Bordnetz benutzt. Dabei weisen die zu End- oder Durchgangsknoten - ganz allgemein Schweißknoten - zu verschweißenden Leitungen 12, 14 häufig in ihren freien Enden Bauelemente wie insbesondere Kontaktteile wie Steckkontakte, Steckverbinder, Stecker- oder Buchsenteile auf, die filigran ausgebildet sein können. Auch besteht die Möglichkeit, dass jedes Ende einer Leitung 12, 14 ein entsprechendes Bauelement aufweist, wie die Fig. 2 verdeutlicht. So weist die Leitung 14 die Bauelemente 16, 18 auf. Die Leitung 12 ist mit einem Bauelement 20 in Form eines Steckverbinders versehen.

Die Ultraschallschweißvorrichtung 10 weist einen üblichen Aufbau auf, d. h., ein Generator ist mit einem Konverter verbunden, mittels dem die Ultraschallschwingungen - ggfs. durch einen Booster verstärkt - auf eine Sonotrode übertragen werden. Die Sonotrode begrenzt die Unterseite eines vorzugsweise in Höhe und Breite verstellbaren Verdichtungsraums 22, der seitlich von einem Schieber 24 und auf gegenüberliegender Seite von einem mehrteiligen Amboss 26 begrenzt ist. Der Amboss 26 besteht aus einer eine obere Seite des Verdichtungsraums 22 begrenzendes Querhaupt aufnehmenden Säule, die gegenüberliegend zum Schieber 24 verläuft und somit seitlich den Verdichtungsraum 22 begrenzt. In Bezug auf den Aufbau einer entsprechenden Ultraschallschweißvorrichtung und den Verdichtungsraum wird auf den Stand der Technik verwiesen, insbesondere auf DE.Z.: Bibliothek der Technik, Band 108, Ultraschallschweißen, verlag moderne industrie, 86895 Landsberg, 1995, insbesondere Seite 20 ff., oder EP-B-0 723 713, auf deren Offenbarungen ausdrücklich Bezug genommen wird und die Gegenstand der vorliegenden Beschreibung sind.

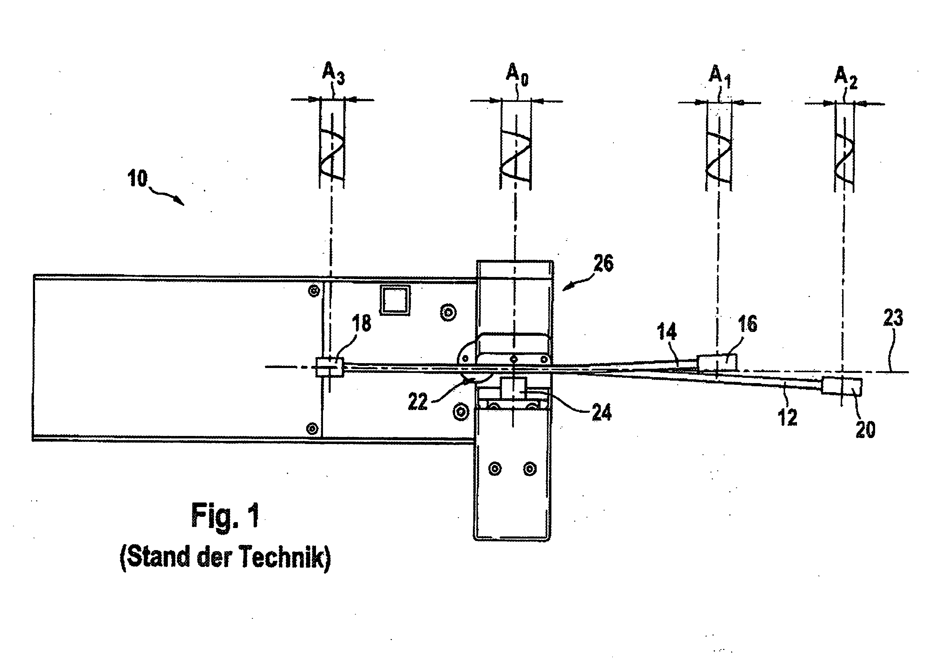

Bei geöffnetem Verdichtungsraum 22, also in den Fig. 1, 3 zum oberen Rand verschobenem Querhaupt und zum unteren Rand verstelltem Schieber 24, werden die Leitungen 12, 14 in den Verdichtungsraum 22 eingelegt. Die entsprechenden sich innerhalb des Verdichtungsraums 22 befindenden abisolierten Abschnitte der Leitungen 12, 14, die auch als erste Abschnitte zu bezeichnen sind, verlaufen bei geschlossenem Verdichtungsraum 22 entlang dessen Längsachse 23.

Üblicherweise werden zur Herstellung von Durchgangsknoten von beiden Seiten des Verdichtungsraums 22 her gesonderte Leitungen eingebracht. Die durchgehende Leitung 14 stellt insoweit einen Sonderfall dar.

Wird mittels der Sonotrode Ultraschall auf die ersten Abschnitte appliziert, so werden die Schwingungen auf die Leitungen 12, 14 mit der Folge übertragen, dass die Bauelemente 16, 18, 20 in einem Umfang in Schwingung versetzt werden, dass diese zerstört werden können.

Die Amplituden Aₒ, A₁, A₂, A₃ der Schwingungen sind in Fig. 1 zeichnerisch rein prinzipiell den einzelnen Abschnitten zugeordnet gezeichnet und verdeutlichen, dass die Amplituden in dem Bereich der Bauelemente 16, 18, 20 im Vergleich zu der im Verdichtungsraum 22 kaum gedämpft sind. Aₒ ist die Amplitude der Sonotrode und die Amplituden A₁, A₂, A₃ sind die im Bereich der Bauelemente 16, 20, 18.

Um die Amplituden zu dämpfen, sind nach dem Stand der Technik bereits die der Fig. 2 zu entnehmenden Maßnahmen getroffen worden.

So besteht die Möglichkeit, entweder die Leitung 14 um 90° abzuwinkeln oder die Leitung 12 zwischen Dämpfungsbacken 30, 32 zu klemmen, die leitungsseitig parallele Begrenzungsflächen aufweisen.

In der Praxis hat sich gezeigt, dass ein wirksames Dämpfen mittels der Dämpfungsbacken 30, 32 nicht möglich ist. Effektiver erfolgt das Dämpfen durch Umlenken der Leitung 14 um 90° (Fig. 2).

Das Umlenken um 90° erfolgt über einen Führungsstift 34. Zwei einen Spalt bildende Führungsstifte 36, 38 sind des Weiteren vorgesehen, in den im Ausführungsbeispiel die Leitung 14 mit ihrem Endbereich eingelegt werden muss, um die 90°-Abwinklung sicherzustellen.

Allerdings ergeben sich Nachteile hinsichtlich des Handlings, da häufig nicht genug Platz zur Verfügung steht, um Leitungen, die sehr lang sein können, um 90° abzuwinkeln. Dabei muss auch berücksichtigt werden, dass Leitungen sich zu beiden Seiten des Verdichtungsraums erstrecken und auf beiden Seiten zu schützende Bauelemente aufweisen können.

Um die dem Stand der Technik immanenten Nachteile zu vermeiden, werden erfindungsgemäß die Leitungen 12, 14 in ihrem Verlauf vor und hinter dem Verdichtungsraum 22 nur abschnittsweise beeinflusst, so dass die Leitungen 12, 14 dem Grunde nach weiterhin entlang der Verlängerung der Längsachse 23 des Verdichtungsraums 22, also entlang der Geraden verlaufen, die durch die innerhalb des Verdichtungsraums 22 verlaufenden ersten Abschnitte der Leitungen 12, 14 vorgegeben wird.

Wie sich aus den Fig. 3 bis 5 ergibt, werden die Leitungen 12, 14 jeweils in einem zweiten Abschnitt 40 bzw. 42 über nachstehend beispielhaft zu erläuternde Umlenkelemente derart umgelenkt, dass sich ein in etwa bogenförmiger Verlauf in den zweiten Abschnitten 40, 42 ergibt. Dieser reicht aus, um die Leitungen 12, 14 in einem Umfang zu dämpfen, dass die in den Enden, also den Bauelementen 16, 18, 20 auftretenden Schwingungen im Vergleich zur Ausgangsamplitude Aₒ im Verdichtungsraum 22 eine erheblich reduzierte Amplitude A₁₀ bzw. A₂₀ bzw. A₃₀ aufweisen, wie prinzipiell der Fig. 3 zu entnehmen ist. Die Amplitude wird durch die bogen- oder kurvenförmige Verlaufsänderung in einem Umfang gedämpft, dass ein Zerstören der Bauelemente 16, 18, 20 ausgeschlossen wird. Die Dämpfung beträgt im Vergleich zur Amplitude der Sonotrode zumindest 50 %, insbesondere bis zu 95 % im Bereich der Bauelemente 16, 18, 20.

Aus der Fig. 3 ergibt sich, dass eine Verlaufsänderung der Leitung 14 sowohl vor als auch hinter dem Verdichtungsraum 22 erfolgt, da die Leitung 14 sich zu beiden Seiten des Verdichtungsraums 22 erstreckt und am jeweiligen Ende ein Bauelement aufweist, und zwar die Bauelemente 16 und 18. Dabei können die die Verlaufsänderungen bewirkenden Umlenkeinrichtungen vor und hinter dem Verdichtungsraum 22 gleich ausgebildet sein. Anstelle der einen Leitung 14 kann von jeder Seite des Verdichtungsraums 22 eine gesonderte Leitung zugeführt werden.

Im Ausführungsbeispiel der Fig. 3 ist ein mittels eines z. B. pneumatisch oder elektrischen Antriebs 44 verstellbares Stift- oder Zylinderelement vorgesehen, das als Andruckstück 46 wirkt und zu einer Seite der Leitungen 12, 14, also der gedachten Verlängerung der Längsachse 23 des Verdichtungsraums 22 verläuft. Gegenüberliegend sind im Ausführungsbeispiel und in Längsrichtung der Leitung 12,14 vor und hinter dem Andruckstück 46 jeweils ein ebenfalls stift- oder zylinderförmig ausgebildetes Gegenelement 48, 50 vorgesehen, deren Abstand D vorzugsweise zwischen 10 mm und 50 mm liegt. Das Andruckstück 46 und die Gegenelemente 48, 50 begrenzen eine Führung für die Leitungen 12, 14, die von der Verlängerung der Längsachse 23 durchsetzt wird.

Das angetriebene Andruckstück sollte um einen Weg S derart verstellt werden, dass die Auslenkung der Leitungen 12, 14 im Bereich zwischen 3 mm und 20 mm liegt.

Werden die Leitungen 12, 14 bei zurückgezogenem Andruckstück 46 zwischen dem Andruckstück 46 und den Gegenstücken 48, 50, also in die Führung gelegt und wird anschließend das Andruckstück 46 in Richtung der Gegenstücke 48, 50 verstellt, so wird den zweiten Abschnitten 40 der Leitungen 12, 14 ein bogen- oder kurvenförmiger Verlauf aufgezwungen. Entsprechendes gilt für den zweiten Abschnitt 42 vor dem Verdichtungsraum 22. Eine bogen- oder kurvenförmige Geometrie kann in Abhängigkeit der Ausbildung und Anordnung von Andruckstücken und Gegenstücken erzielt werden.

Damit zum einen ein Ausweichen der Leitungen 12, 14, insbesondere ein Hochwandern dieser entlang des Andruckstücks 46 bzw. der Gegenstücke 48, 50 - die auch als Gegenlager bezeichnet werden können - nicht erfolgt, können diese profiliert sein, wie die Darstellung eines entsprechenden zylinderförmigen Elements 52 in Fig. 4 verdeutlicht, das als Andruckstück 46 bzw. Gegenstück 48, 50 benutzt werden kann. Ergänzend bzw. alternativ besteht die Möglichkeit, das Andruckstück 46 bzw. die Gegenstücke 48, 50 drehbar auszubilden (Element 54 in Fig. 4). Hierdurch ist eine sichere Führung der Leitungen 12, 14 gewährleistet.

Das Andruckstück 46 und die Gegenelemente 48, 50 - auch Gegenstücke genannt - die im Ausführungsbeispiel der Fig. 3 bis 5 von einer horizontal verlaufenden Arbeitsfläche 53 ausgehen, bilden folglich eine Umlenkeinrichtung 51, wobei das Andruckstück 46 vorzugsweise mittig zwischen den Gegenstücken 48, 50 verläuft.

Bei einer horizontal verlaufenden Arbeitsfläche, wie diese den Fig. 3 - 5 zu entnehmen ist, und bei von diesen ausgehenden Umlenkelementen sind auch folgende Ausgestaltungen möglich. Andruckstück 46 bzw. Gegenstücke 48, 50 können eine Kegelförm aufweisen, wobei die Spitze nach unten zeigt, wie die Darstellung in Fig. 4 (Element 55) verdeutlicht.

Es besteht auch die Möglichkeit, dass die stift- bzw. zylinderförmigen Elemente, also das Andruckstück 46 und die Gegenstücke 48, 50 zur Vertikalen kippbar angeordnet sind, um das Einlegen der Leitungen 12, 14 zu erleichtern.

Damit beim Verstellen des Andruckstücks 46 in Richtung einer die Gegenstücke 48, 50 verbindenden Geraden die Leitungen 12, 14 in der zeichnerischen Darstellung der Fig. 3 nicht zum oberen Rand der Zeichnung ausweichen können, kann ein Führungsstift 56 auf der den Verdichtungsraum 22 abgewandten Seite der Umlenkeinrichtung 51 vorgesehen sein, und zwar auf der Seite der Leitungen 12, 14, auf der das Andruckstück 46 auf die Leitungen 12, 14 einwirkt. Somit ist sichergestellt, dass beim Aufprägen der Verlaufsänderung auf die Leitungen 12, 14 diese endseitig nicht ausweichen mit der Folge, dass diese weiterhin entlang der Verlängerung der Längsachse 23 des Verdichtungsraums 22 verlaufen.

Die Anordnung des Andruckstücks 46, der Gegenstücke 48, 50 und des vorzugsweise drehbar ausgebildeten Führungsstifts 56 und die Zuordnung zueinander ergibt sich auch aus der Seitendarstellung der Anordnung gemäß Fig. 4, in der abweichend von der Darstellung in Fig. 3 die linke Umlenkeinrichtung weggelassen worden ist.

Das quer zur Verlängerung der Längsachse 23 verstellbare Andruckstück 46 kann auch eine Gabelform aufweisen, d. h. zwei stift- oder zylinderförmige Elemente aufweisen, zwischen denen die Leitungen 12, 14 einlegbar sind. Die zwei stift- oder zylinderförmigen Elemente spannen dabei eine Gerade auf, die quer zu den Leitungen 12, 14 verläuft. Um die Leitungen 12, 14 in ihrem Verlauf, und zwar in ihrem jeweiligen zweiten Abschnitt 40 in gewünschtem Umfang zu verändern, wird sodann das gabelförmig ausgebildete Andruckstück zu den in den Fig. 3 und 4 vorhandenen Gegenstücken 48, 50 verstellt.

Die gabelförmige Ausführungsform gewährleistet beim Zurückfahren, dass die verbogenen Leitungen 12, 14 wieder oder wieder annähernd in ihre Ausgangsform (gerader Verlauf) zurückverformt werden.

Eine weitere Ausgestaltung einer Umlenkeinrichtung 61 ist der Fig. 5 zu entnehmen. So wird der jeweilige zweite Abschnitt 40 der Leitungen 12, 14 zwischen einem Druckformstück 58 und einem Gegenstück oder Gegenlager 60 geführt, die leitungsseitig einen Geometrieverlauf aufzeigen, der die gewünschte Verlaufsänderung der zweiten Abschnitte 40 sicherstellt. Im Ausführungsbeispiel ist das Druckformstück 58 mit dem Antrieb 44 verbunden. Eine entsprechende Umlenkeinrichtung kann auch auf der in der Darstellung linken Seite des Verdichtungsraums 22 vorgesehen sein.

Das Druckformstück 58 kann einteilig oder mehrteilig ausgebildet sein. Leitungsseitig kann dieses profiliert sein. Die Oberfläche kann ferner aus elastischem Material bestehen. Auch kann das Druckformstück 58 mit dem Antrieb 44 durch einen Balgzylinder ersetzt werden, der sich stirnseitig an den Geometrieverlauf des Gegenlagers 60 anpasst.

Anstelle des dargestellten Gegenlagers 60 kann auch ein Stift oder eine Rolle vorgesehen sein, der bzw. die derart zu dem Druckformstück 58 positioniert ist, dass die Leitungen 12, 14 in Richtung einer Vertiefung 62 des Druckformstücks 58 verbogen werden, wenn das Druckformstück 58 in Richtung des nicht dargestellten Stifts bzw. der Rolle verstellt wird.

Aus der Prinzipdarstellung der Fig. 5 erkennt man, dass die einander zugewandten Oberflächen des Druckformstücks 58 und des Gegenstücks 60 zumindest in einem Umfang komplementär zueinander ausgebildet sind, in dem die gewünschten Verlaufsänderungen auf die zweiten Abschnitte 40 der Leitungen 12, 14 aufgeprägt werden sollen.

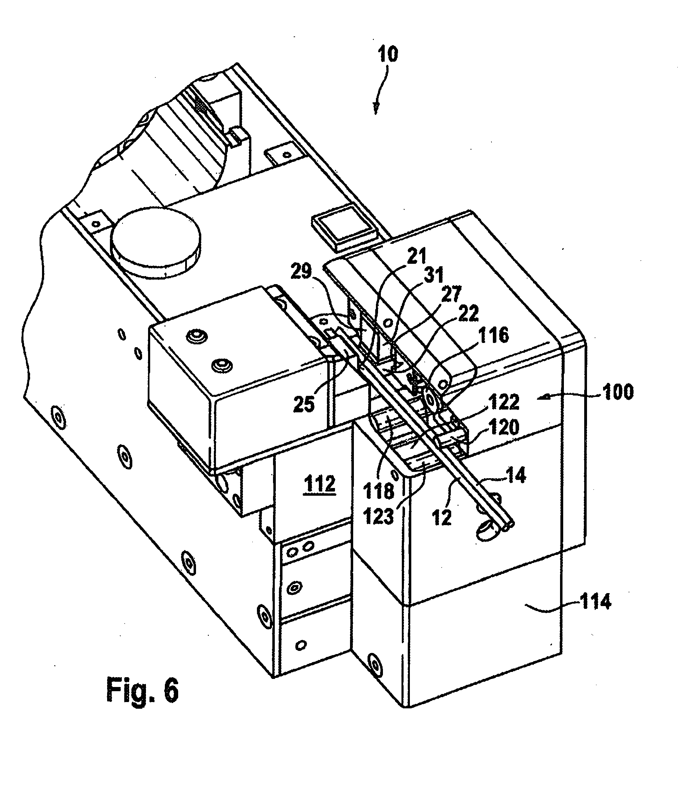

Ist in den Fig. 3 - 5 eine Anordnung rein prinzipiell dargestellt, bei der die Umlenkelemente in einer Ebene relativ zueinander verstellbar sind, die horizontal verläuft, also durch die Arbeitsfläche 53 vorgegeben ist, so besteht nach dem Ausführungsbeispiel der Fig. 6 - 8 die Möglichkeit, eine Verstellung sowohl senkrecht zu den Leitungen 12, 14 als auch in vertikaler Richtung durchzuführen. Hierdurch ergibt sich eine kompakte Baueinheit, da der Antrieb wie Pneumatikzylinder an die Stirnseite 112 der Ultraschallschweißvorrichtung 10 angebaut werden kann. Dies ist rein prinzipiell den Fig. 6 - 8 zu entnehmen, wobei der Antrieb wie Pneumatikzylinder in einem Gehäuse 114 angeordnet und damit nicht sichtbar ist.

In Fig. 6 ist der Verdichtungsraum 22 geöffnet, der von einer Fläche 21 einer Sonotrode, einer senkrecht verlaufenden Begrenzungsfläche eines Seitenschiebers 25, einer gegenüberliegenden Seitenfläche 27 eines zweiteiligen Ambosses 29 mit Querhaupt 31 begrenzt wird. Bei geschlossenen Verdichtungsraum 22 verschließt das Querhaupt 31 den Verdichtungsraum gegenüberliegend zur Fläche 21 der Sonotrode.

Es findet sich folglich eine Konstruktion wie diese der EP-B-0 723 713 zu entnehmen ist.

In der Fig. 6 ist die Umlenkeinrichtung 100, mittels der die Leitungen 12, 14 beim Verschweißen gedämpft werden, in der Stellung dargestellt, in der das Einlegen der Leitungen 12, 14 in den Verdichtungsraum 22 erfolgt. Hierzu befindet sich ein vorzugsweise eine Zylinderform aufweisendes erstes Umlenkelement 116 in einer zurückgefahrenen Position, um das Einlegen der Leitungen 12, 14 in den Verdichtungsraum 22 zu erleichtern. Man erkennt aus der zeichnerischen Darstellung, dass in Bezug auf den Verdichtungsraum 22 zwischen diesem und dem mit dem Kolben des Zylinders verbundenen Umlenkelement 116 ein weiteres (zweites) Umlenkelement 118 angeordnet ist, das gleichfalls vorzugsweise eine Zylinderform oder einen Teil einer solchen aufweist, deren Achse parallel zu der des Umlenkelements 116 verläuft. In dem verdichtunsraumfemliegenden Bereich des verstellbaren Umlenkelements 116 ist ein drittes Umlenkelement 123 vorhanden, das auf der Seite in Bezug auf die Leitungen 12, 14 angeordnet ist wie das zweite Umlenkelement 118. Das dritte Umlenkelement 123 kann dabei gleichfalls eine Zylinderform aufweisen, ist jedoch bevorzugterweise - wie das zweite Umlenkelement 118 - ein Abschnitt wie Radius des Gehäuses 114. Schließlich ist ein als Widerlager zu bezeichnendes viertes Umlenkelement 120 vorzugsweise zylinder- oder stiftförmiger Geometrie vorgesehen, das auf der Seite verläuft, auf der das verstellbare Umlenkelement 116 angeordnet ist. Ferner wird aus den Figuren ersichtlicht, dass unterhalb des verstellbaren Umlenkelementes 116 ein als Druckstück 122 zu bezeichnendes weiteres Element in dem Gehäuse 114 angeordnet ist, das in einer Ebene verstellbar ist, in der das Umlenkelement 116 verstellt wird, also in der Darstellung vertikal. Das Druckelement 122 hat die Aufgabe, die Leitungen 12, 14 in etwa in ihre Ausgangsverlaufsform zurückzubiegen.

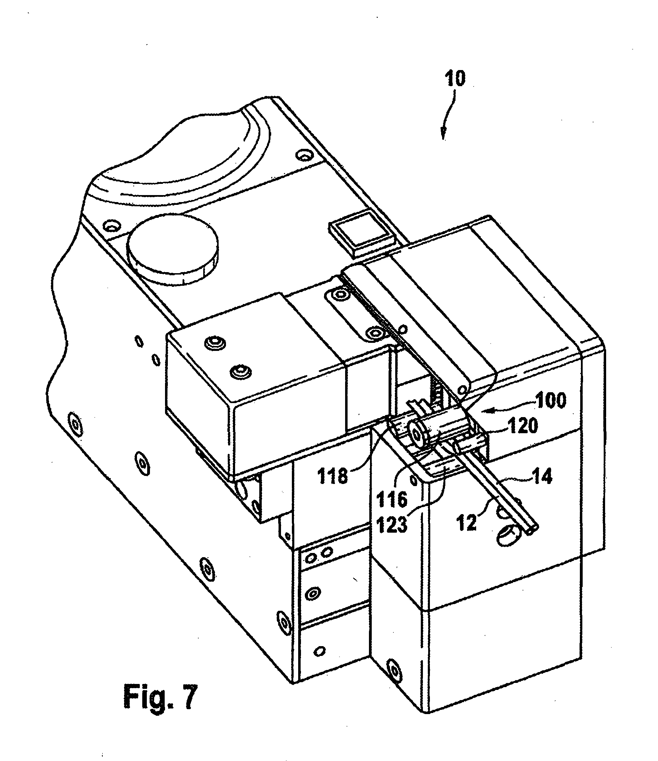

Erwähntermaßen ist in Fig. 6 die Position der Ultraschallschweißvorrichtung 10 wiedergegeben, in der die Leitungen 12, 14 in den Verdichtungsraum 22 eingelegt werden. In der Fig. 7 wird die Stellung rein prinzipiell dargestellt, in der die Leitungen 12, 14 in dem Verdichtungsraum 22 verschweißt werden und dabei durch Absenken des Umlenkelements 116 in Richtung der Leitungen 12, 14 gedämpft werden. Hierdurch bedingt werden die Leitungen 12, 14 verformt, da diese zwischen dem verdichtungsraumnaheliegenden zweiten Umlenkelement 118, dem abgesenkten ersten Umlenkelement 116 und dem verdichtungsraumfernliegenden dritten Umlenkelement 123 verlaufen. Um ein unerwünschtes Auslenken der freien Enden der Leitungen 12, 14 zu verhindern, ist das verdichtungsraumfernliegende vierte Umlenkelement 120 oder Widerlager vorgesehen, an dem sich die freien Abschnitte der Leitungen 12, 14 bei der aufgezwungenen Verlaufsänderung anlegen können. Hierzu ist vorgesehen, dass das Widerlager oder vierte Umlenkelement 123 drehbar ausgebildet ist, genau so wie die Widerlager 56 in den Fig. 3 und 4. Durch die Drehbarkeit erfolgt ein reibungsloses Verstellen der Leitungen 12, 14 zu dem Umlenkelement 123, wenn diese durch Verstellen des Umlenkelements 116 zum Dämpfen der Leitungen 12, 14 oder beim Zurückbiegen verformt werden.

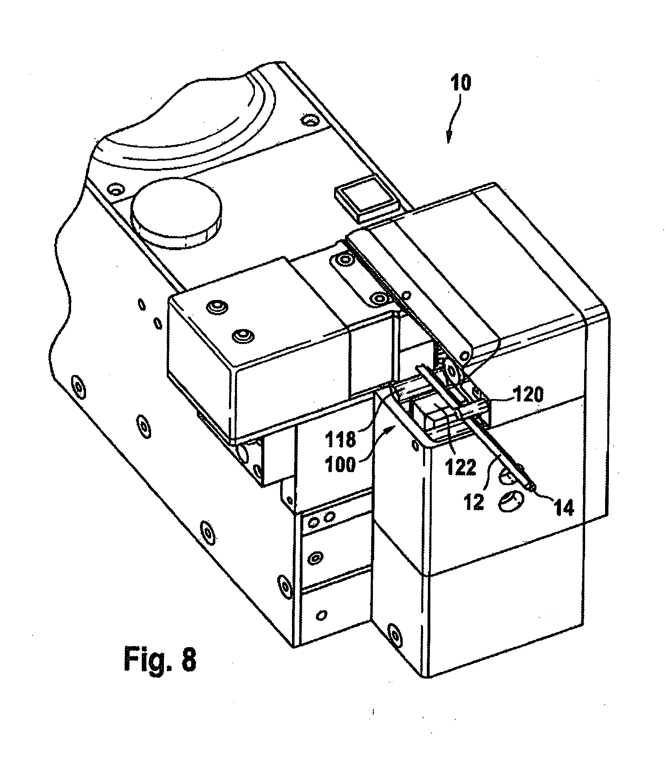

Nachdem die Leitungen 12, 14 verschweißt sind, verbleiben diese mit ihren abisolierten und zu einem Knoten verschweißten Enden 13, 15 in dem Verdichtungsraum 22 fixiert. Das verstellbare erste Umlenkelement 116 wird von den Leitungen 12, 14 abgehoben und zurückgefahren, wie ein Vergleich der Fig. 7 und 8 verdeutlicht. Sodann wird das Druckstück 122 in Richtung der Leitungen 12, 14, also vertikal verstellt, so dass die zuvor in Richtung des Druckstücks 122 verformten Leitungen 12, 14 zurückgebogen werden können.

Zum Verstellen des Druckelements 116 sowohl in horizontaler als auch in vertikaler Richtung kann eine Konstruktion gewählt werden, wie diese im Zusammenhang mit dem mehrteiligen Amboss zum Einsatz gelangt, d. h. die Bewegungen überlagern sich. Insoweit wird auf die entsprechenden Konstruktionen verwiesen.

Auch besteht die Möglichkeit, zu beiden Seiten des Verdichtungsraums 22 eine Umlenkeinrichtung 100 vorzusehen.

### Bezugszeichenliste

- 10: Ultraschallschweißvorrichtung
- 12, 14: Leitungen
- 16, 18: Enden
- 20: Bauelement
- 21: Fläche
- 22: Verdichtungsraum
- 23: Längsachse
- 24: Schiene
- 25: Seitenschiene
- 26: Amboss
- 27: Seitenfläche
- 29: Amboss
- 30, 32: Dämpfungsbacke
- 31: Querhaupt
- 34: Führungsstifte
- 36, 38: Führungsstifte
- 40, 42: zweiter Abschnitt
- 44: Antrieb
- 46: Andruckstück
- 48, 50: Gegenelement
- 51: Umlenkeinrichtung
- 52: zylinderförmiges Element
- 53: Arbeitsfläche
- 54: Element
- 55: Element
- 56: Führungsstift
- 58: Druckformstück
- 60: Gegenachse
- 61: Umlenkeinrichtung
- 62: Vertiefung
- 100: Umlenkeinrichtung
- 112: Stirnseite
- 114: Gehäuse
- 116: Umlenkelement
- 118: Umlenkelement
- 120: Umlenkelement
- 122: Druckstück
- 123: Umlenkelement

## Patentansprüche

1. Verfahren zum Verschweißen von aus metallischen Litzen oder Adern bestehenden Leitungen (12, 14) zu einem End- oder Durchgangsknoten durch Einbringen von jeweils einem ersten Abschnitt jeder Leitung in einen Verdichtungsraum (22) einer Ultraschallschweißvorrichtung (10), in dem die ersten Abschnitte entlang einer Geraden verlaufen, wobei zumindest eine Leitung im Abstand zu dem zu schweißenden End- oder Durchgangsknoten ein Bauelement (16, 18, 20) wie Kontaktelement aufweist und zumindest die das Bauelement aufweisende Leitung zwischen dem Verdichtungsraum und dem Bauelement in einem zweiten Abschnitt (40, 42) durch mittels einer Umlenkeinrichtung (51, 61, 100) erzwungene Verlaufsänderung der Leitung gedämpft wird,
**dadurch gekennzeichnet,**
**dass** zumindest die das Bauelement (40, 42) aufweisende Leitung (12, 14) in Verlängerung der Geraden ausgerichtet wird und auf den in Verlängerung der Geraden verlaufenden zweiten Abschnitt (40, 42) auf gegenüberliegende Seiten des zweiten Abschnitts die Umlenkeinrichtung (51, 61, 100) einwirkt, wobei durch Verstellen der Umlenkeinrichtung zu dem zweiten Abschnitt dieser abschnittsweise eine Verlaufsänderung erfährt.

2. Verfahren nach Anspruch 1,
**dadurch gekennzeichnet,**
**dass** der zweite Abschnitt (40, 42) eine bogen- oder S- oder Z- oder mäanderförmige Verlaufsänderung erfährt.

3. Verfahren nach Anspruch 1 oder 2,
**dadurch gekennzeichnet,**
**dass** der zweite Abschnitt (40, 42) zwischen mehreren Umlenkelementen (52, 54, 55, 56, 58, 116, 118, 120, 123) wie zylinder- oder kegelförmigen Elementen oder Formstücken geführt wird, von denen zumindest zwei Umlenkelemente zur Erzwingung der Verlaufsänderung quer zur Längsrichtung der Leitung (12, 14) relativ aufeinanderzu verstellt werden.

4. Verfahren nach zumindest einem der vorhergehenden Ansprüche,
**dadurch gekennzeichnet,**
**dass** die Leitungen (12, 14) von einem gabelförmigen ersten Druckelement aufgenommen werden, das zur Erzielung der Verlaufsänderung zu zumindest einem zweiten Druckelement verstellt wird, und dass beim Zurückverstellen des ersten Druckelementes die Leitungen zum Rückgängigmachen der Verlaufsänderung zurückgebogen werden.

5. Verfahren nach zumindest einem der vorhergehenden Ansprüche,
**dadurch gekennzeichnet,**
die zumindest zwei Umlenkelemente (52, 54, 55, 56, 58, 116, 118, 120, 123) in einer horizontal oder vertikal verlaufenden Ebene relativ zueinander verstellt werden.

6. Verfahren nach zumindest einem der vorhergehenden Ansprüche,
**dadurch gekennzeichnet,**
**dass** bei zum Aufzwingen der Verlaufsänderung vertikal verstellbarem Umlenkelement dieses zum Einlegen der Leitungen (12, 14) in den Verdichtungsraum (22) horizontal verstellt wird.

7. Verfahren nach zumindest einem der vorhergehenden Ansprüche,
**dadurch gekennzeichnet,**
**dass** sämtliche entlang der das Bauelement (16, 18, 20) aufweisenden Leitung (12, 14) verlaufende weitere Leitungen zwischen der Umlenkeinrichtung (51, 61, 100) hindurchgeführt werden.

8. Anordnung zum Ultraschallverschweißen von aus metallischen Litzen oder Adern bestehenden Leitungen (12, 14), umfassend eine jeweils einen ersten Abschnitt einer jeden Leitung aufnehmenden Verdichtungsraum (22), entlang dessen Längsachse (23) die ersten Abschnitte ausrichtbar sind, sowie eine zumindest eine der Leitungen, vorzugsweise sämtliche Leitungen aufnehmende Umlenkeinrichtung (51, 61, 100), die im Abstand zu dem Verdichtungsraum in Verlängerung der Längsachse des Verdichtungsraums angeordnet ist,
**dadurch gekennzeichnet,**
**dass** die Umlenkeinrichtung (51, 61, 100) zumindest zwei relativ zueinander verstellbare Umlenkelemente (46, 48, 50; 58, 60; 116, 118, 123) aufweist, die im Bereich der Verlängerung der Längsachse (23) des Verdichtungsraums (22) eine Führung für die zumindest eine Leitung (12, 14) bilden, durch die der Leitung im Bereich der Führung eine Verlaufsänderung aufzwingbar ist.

9. Anordnung nach Anspruch 8,
**dadurch gekennzeichnet,**
**dass** zumindest ein Umlenkelement (46, 48, 50, 52, 54, 55, 116) eine zylinder- oder kegelförmige Geometrie aufweist und/oder drehbar gelagert ist und/oder ein ein- oder mehrteiliges Druckformstück (58, 60) und/oder im Bereich der Führung führungsseitig profiliert ist und/oder elastisch ausgebildet ist und/oder ein Balgzylinder ist.

10. Anordnung nach Anspruch 8 oder 9,
**dadurch gekennzeichnet,**
**dass** die Umlenkeinrichtung (51, 100) sich zu beiden Seiten der Führung erstreckende vorzugsweise zylinder- oder stiftförmig ausgebildete Umlenkelemente (46, 48, 50; 116, 118, 123) aufweist, dass ein vorzugsweise zylinder- oder stiftförmig ausgebildetes Umlenkelement auf einer Seite der Führung angeordnet ist und quer, insbesondere senkrecht zur Verlängerung der Längsachse (23) des Verdichtungsraums (22) und relativ zu zumindest zwei zweiten auf der anderen Seite der Führung angeordneten Umlenkelementen verstellbar ist, wobei entlang der Verlängerung der Längsachse betrachtet zwischen den zwei zweiten Umlenkelementen das erste Umlenkelement angeordnet ist.

11. Anordnung nach zumindest einem der Ansprüche 8 bis 10,
**dadurch gekennzeichnet,**
**dass** zumindest ein Umlenkelement (46, 58, 116) mit einem vorzugsweise elektrischen oder pneumatischen Antrieb (44) zum Verstellen zu zumindest einem weiteren Umlenkelement oder einem Paar von Umlenkelementen (48, 50, 60; 118, 123) verbunden ist.

12. Anordnung nach zumindest einem der Ansprüche 8 bis 11,
**dadurch gekennzeichnet,**
**dass** die Führung auf einer Seite von einem führungsseitig in seiner Oberfläche eine bogenförmige Geometrie aufweisenden ersten Druckformstück (58) und auf der anderen Seite von einem dem Druckformstück zugeordneten Gegenlager (60) begrenzt ist, dessen dem Druckformstück zugewandte Oberfläche zumindest abschnittsweise ein zur Oberflächengeometrie des Druckformstücks komplementären Geometrieverlauf aufweist.

13. Anordnung nach zumindest einem der Ansprüche 8 bis 12,
**dadurch gekennzeichnet,**
**dass** auf verdichtungsraumabgewandter Seite der Führung ein stationäres vorzugsweise drehbares Führungselement (56, 120) angeordnet ist, das im Bereich der Verlängerung der Längsachse (23) des Verdichtungsraums (22) auf der Seite von zu verschweißenden Leitungen (12, 14) angeordnet ist, auf der sich das verstellbare Umlenkelement (46) befindet.

14. Anordnung nach zumindest einem der Ansprüche 8 bis 13,
**dadurch gekennzeichnet,**
**dass** ein Umlenkelement eine Gabelform derart aufweist, dass zwei stift- oder zylinderförmige Elemente Aufnahme für die zumindest eine Leitung (12, 14) bilden und dass das gabelförmig ausgebildete Umlenkelement zu zwei weiteren Umlenkelementen verstellbar ist, wobei jeweils ein weiteres Umlenkelement jeweils zu einer Seite des gabelförmigen Umlenkelementes verläuft.

15. Anordnung nach zumindest einem der Ansprüche 8 bis 14,
**dadurch gekennzeichnet,**
**dass** das verstellbare Umlenkelement (46, 58, 116) mit einem Antrieb (44) zu dessen horizontalem oder vertikalem Verstellen verbunden ist.

## Claims

1. Method for welding cables (12, 14) made from metal strands or cores to form an end node or transit node by introducing in each case a first section of each cable into a compression space (22) of an ultrasound welding device (10) in which the first sections extend along a straight line, wherein at least one cable comprises, spaced from the end node or transit node to be welded, a component (16, 18, 20), such as a contact element, and at least the cable comprising the component, between the compression space and the component in a second section (40, 42), is damped by a change in the course of the cable, which is forced by means of a deflection device (51, 61, 100),
**characterized in that,**
at least the cable (12, 14) comprising the component (40, 42) is aligned in the extension of the straight line, and the deflection device (51, 61, 100) acts on the second section (40, 42) extending in the extension of the straight line, on opposite sides of the second section, wherein due to the adjustment of the deflection device toward the second section, the latter undergoes a change in course in sections.

2. Method according to claim 1,
**characterized in that,**
the second section (40, 42) undergoes an arc- or S- or Z-shaped or meandering change in course.

3. Method according to claim 1 or 2,
**characterized in that,**
the second section (40, 42) is guided between several deflection elements (52, 54, 55, 56, 58, 116, 118, 120, 123), such as cylindrical or conical elements or mold parts, of which at least two deflection elements are adjusted relatively toward each other to force the change in course transversely to the longitudinal direction of the cable (12, 14).

4. Method according to at least one of the preceding claims,
**characterized in that,**
the cables (12, 14) are held by a first fork-shaped pressure element which is adjusted to achieve the change in course toward at least one second pressure element, and **in that**, during the resetting of the first pressure element, the cables are bent back to reverse the change in course.

5. Method according to at least one of the preceding claims,
**characterized in that,**
the at least two deflection elements (52, 54, 55, 56, 58, 116, 118, 120, 123) are adjusted relative to each other in a horizontally or vertically extending plane.

6. Method according to at least one of the preceding claims,
**characterized in that,**
for the forcing of the change in the course of the vertically adjustable deflection element, the latter is adjusted horizontally for the insertion of the cables (12, 14) into the compression space (22).

7. Method according to at least one of the preceding claims,
**characterized in that,**
all the additional cables extending along the cable (12, 14) comprising the component (16, 18, 20) are run through, between the deflection device (51, 61, 100).

8. Arrangement for ultrasound welding of cables (12, 14) made from metal strands or cores, comprising a compression space (22) holding in each case a first section of each cable, along whose longitudinal axis (23) the first sections can be aligned, as well as a deflection device (51, 61, 100) which holds at least one of the cables, preferably all of the cables, and which is arranged with spacing from the compression space in the extension of the longitudinal axis of the compression space,
**characterized in that,**
the deflection device (51, 61, 100) comprises at least two deflection elements (46, 48, 50; 58, 60; 116, 118, 123) which can be adjusted relative to each other, and which form, in the area of the extension of the longitudinal axis (23) of the compression space (22), a guide for the at least one cable (12, 14), by means of which a change in course can be forced onto the cable in the area of the guide.

9. Arrangement according to claim 8,
**characterized in that,**
at least one deflection element (46, 48, 50, 52, 54, 55, 116) has a cylindrical or conical geometry and/or is rotatably mounted and/or is a single piece or multipiece pressure mold part (58, 60) and/or, in the area of the guide on the guide side, is profiled and/or configured so as to be resilient and/or is a bellows cylinder.

10. Arrangement according to claim 8 or 9,
**characterized in that,**
the deflection device (51, 100) comprises preferably cylindrical or pin-shaped deflection elements (46, 48, 50; 116, 118, 123) extending on both sides of the guide, **in that** a preferably cylindrical or pin-shaped deflection element is arranged on one side of the guide, and can be adjusted transversely, particularly perpendicularly to the extension of the longitudinal axis (23) of the compression space (22) and relative to at least two second deflection elements arranged on the other side of the guide, wherein, viewed along the extension of the longitudinal axis, the first element is arranged between the two second deflection elements.

11. Arrangement according to at least one of the claims 8 to 10,
**characterized in that,**
at least one deflection element (46, 58, 116) is connected to a preferably electrical or pneumatic drive (44) for adjusting toward at least one additional deflection element or pair of deflection elements (48, 50, 60; 118, 123).

12. Arrangement according to at least one of the claims 8 to 11,
**characterized in that,**
the guide is delimited on one side by a first pressure mold part (58) having on the guide side in its surface an arc-shaped geometry, and on the other side by a counter bearing (60) which is associated with the pressure mold part and whose surface facing the pressure mold part has, at least in sections, a geometric course complementary to the surface geometry of the pressure mold part.

13. Arrangement according to at least one of the claims 8 to 12,
**characterized in that,**
on the side of the guide which is turned away from the compression space, a stationary, preferably rotatable, guide element (56, 120) is arranged, which is arranged in the area of the extension of the longitudinal axis (23) of the compression space (22) on the side of cables (12, 14) to be welded, on which the adjustable deflection element (46) is located.

14. Arrangement according to at least one of the claims 8 to 13,
**characterized in that,**
one deflection element has a fork shape such that two pin-shaped or cylindrical elements form a holding fixture for the at least one cable (12, 14) and **in that** the fork-shaped deflection element is adjustable toward two additional deflection elements, wherein in each case an additional deflection element extends in each case toward one side of the fork-shaped deflection element.

15. Arrangement according to at least one of the claims 8 to 14,
**characterized in that,**
the adjustable deflection element (46, 58, 116) is connected to a drive (44) to enable its horizontal or vertical adjustment.

## Revendications

1. Procédé destiné au soudage de lignes électriques (12, 14) constituées de fils toronnés ou de brins métalliques pour réaliser un noeud d'extrémité ou de passage en introduisant respectivement une première section de chaque ligne électrique dans une chambre de compression (22) d'un dispositif de soudage par ultrasons (10), chambre dans laquelle les premières sections s'étendent le long d'une droite, sachant qu'au moins une ligne électrique présente à distance du noeud d'extrémité ou de passage à souder un composant (16, 18, 20), tel qu'un élément de contact, et qu'au moins la ligne électrique présentant le composant est amortie entre la chambre de compression et le composant dans une deuxième section (40, 42) au moyen d'un changement de trajectoire de la ligne électrique imposé par un dispositif déviateur (51, 61, 100),
**caractérisé en ce**
**qu'**au moins la ligne électrique (12, 14) présentant le composant (40, 42) est orientée dans le prolongement de la droite, et que le dispositif déviateur (51, 61, 100) agit sur les côtés opposés de la deuxième section (40, 42) s'étendant dans le prolongement de la droite, sachant que le déplacement du dispositif déviateur par rapport à la deuxième section soumet cette dernière à un changement de trajectoire par sections.

2. Procédé selon la revendication 1,
**caractérisé en ce**
**que** la deuxième section (40, 42) subit un changement de trajectoire en forme d'arc de cercle ou de S ou de Z ou de méandre.

3. Procédé selon la revendication 1 ou 2,
**caractérisé en ce**
**que** la deuxième section (40, 42) est guidée entre plusieurs éléments déviateurs (52, 54, 55, 56, 58, 116, 118, 120, 123), tels que des éléments cylindriques ou coniques, ou des pièces de mise en forme, dont au moins deux éléments déviateurs sont déplacés l'un par rapport à l'autre pour imposer le changement de trajectoire transversalement au sens longitudinal de la ligne électrique (12, 14).

4. Procédé selon au moins une des revendications précédentes,
**caractérisé en ce**
**que** les lignes électriques (12, 14) sont saisies par un premier élément presseur fourchu qui est déplacé pour obtenir le changement de trajectoire vers au moins un deuxième élément presseur, et qu'en ramenant le premier élément presseur dans sa position initiale, les lignes électriques sont redressées pour supprimer le changement de trajectoire.

5. Procédé selon au moins une des revendications précédentes,
**caractérisé en ce**
**qu'**au moins deux éléments déviateurs (52, 54, 55, 56, 58, 116, 118, 120, 123) sont déplacés l'un par rapport à l'autre dans un plan horizontal ou vertical.

6. Procédé selon au moins une des revendications précédentes,
**caractérisé en ce**
**que** lors de l'opération pour imposer le changement de trajectoire, l'élément déviateur mobile verticalement est déplacé à l'horizontale pour permettre l'introduction des lignes électriques (12, 14) dans la chambre de compression (22).

7. Procédé selon au moins une des revendications précédentes,
**caractérisé en ce**
**que** toutes les autres lignes électriques s'étendant le long de la ligne électrique (12, 14) présentant le composant (16, 18, 20) passent à travers le dispositif déviateur (51, 61, 100).

8. Dispositif destiné au soudage par ultrasons de lignes électriques (12, 14) constituées de fils toronnés ou de brins métalliques, comprenant une chambre de compression (22) recevant respectivement une première section de chaque ligne électrique, dont les premières sections peuvent être orientées le long de l'axe longitudinal (23) de ladite chambre de compression, ainsi qu'un dispositif déviateur (51, 61, 100) recevant au moins une des lignes électriques, de préférence toutes les lignes électriques, et qui est disposé à distance de la chambre de compression dans le prolongement de l'axe longitudinal de la chambre de compression,
**caractérisé en ce**
**que** le dispositif déviateur (51, 61, 100) présente au moins deux éléments déviateurs (46, 48, 50 ; 58, 60 ; 116, 118, 123) mobiles l'un par rapport à l'autre, qui dans la zone du prolongement de l'axe longitudinal (23) de la chambre de compression (22) forment un guide pour l'au moins une ligne électrique (12, 14), au moyen duquel un changement de trajectoire peut être imposé à la ligne électrique dans la zone du guide.

9. Dispositif selon la revendication 8,
**caractérisé en ce**
**qu'**au moins un élément déviateur (46, 48, 50, 52, 54, 55, 116) présente une géométrie cylindrique ou conique et/ou est logé de manière pivotante et/ou est une pièce de mise en forme par pression (58, 60) en une ou plusieurs parties et/ou est profilé du côté du guide dans la zone du guide et/ou est conçu de manière élastique et/ou est un vérin à soufflet.

10. Dispositif selon la revendication 8 ou 9,
**caractérisé en ce**
**que** le dispositif déviateur (51, 100) présente des éléments déviateurs (46, 48, 50 ; 116, 118, 123) de préférence en forme de cylindre ou de tige s'étendant des deux côtés du guide, qu'un élément déviateur de préférence en forme de cylindre ou de tige est disposé d'un côté du guide et est mobile transversalement, en particulier perpendiculairement au prolongement de l'axe longitudinal (23) de la chambre de compression (22) ainsi que par rapport à au moins deux deuxièmes éléments déviateurs disposés de l'autre côté du guide, sachant que vu le long du prolongement de l'axe longitudinal, le premier élément déviateur est disposé entre les deux deuxièmes éléments déviateurs.

11. Dispositif selon au moins une des revendications 8 à 10 précédentes,
**caractérisé en ce**
**qu'**au moins un élément déviateur (46, 58, 116) est relié à un mécanisme d'entraînement (44) de préférence électrique ou pneumatique destiné à le déplacer par rapport à au moins un autre élément déviateur ou une paire d'éléments déviateurs (48, 50, 60 ; 118, 123).

12. Dispositif selon au moins une des revendications 8 à 11 précédentes,
**caractérisé en ce**
**que** le guide est délimité d'un côté par une première pièce de mise en forme par pression (58) côté guide présentant dans sa surface une géométrie arquée, et de l'autre côté par un palier-support (60) associé à la pièce de mise en forme par pression et dont la surface orientée vers la pièce de mise en forme par pression présente au moins partiellement un tracé géométrique complémentaire de la géométrie de la surface de la pièce de mise en forme par pression.

13. Dispositif selon au moins une des revendications 8 à 12 précédentes,
**caractérisé en ce**
**que** du côté du guide opposé à la chambre de compression est disposé un élément de guidage (56, 120) stationnaire de préférence pivotant, qui, dans la zone du prolongement de l'axe longitudinal (23) de la chambre de compression (22), est placé du côté des lignes électriques (12, 14) à souder sur lequel se trouve l'élément déviateur (46) mobile.

14. Dispositif selon au moins une des revendications 8 à 13 précédentes,
**caractérisé en ce**
**qu'**un élément déviateur présente une forme fourchue de manière telle que deux éléments en forme de tige ou de cylindre forment un logement pour l'au moins une ligne électrique (12, 14), et que l'élément déviateur de forme fourchue est mobile par rapport à deux éléments déviateurs supplémentaires, sachant que chaque élément déviateur supplémentaire s'étend respectivement vers un côté de l'élément déviateur fourchu.

15. Dispositif selon au moins une des revendications 8 à 14 précédentes,
**caractérisé en ce**
**que** l'élément déviateur (46, 58, 116) mobile est relié à un mécanisme d'entraînement (44) destiné à assurer son déplacement horizontal ou vertical.
